(19) **Europäisches Patentamt**

**European Patent Office**

**Office européen des brevets**

(11) **EP 0 908 529 A1**

(12) # EUROPÄISCHE PATENTANMELDUNG

(43) Veröffentlichungstag:
**14.04.1999 Patentblatt 1999/15**

(51) Int. Cl.$^6$: **C23C 8/16**, **H01M 8/12**, **H01M 8/02**

(21) Anmeldenummer: **97117611.0**

(22) Anmeldetag: **10.10.1997**

(84) Benannte Vertragsstaaten:
**AT BE CH DE DK ES FI FR GB GR IE IT LI LU MC NL PT SE**

(71) Anmelder:
**SIEMENS AKTIENGESELLSCHAFT**
**80333 München (DE)**

(72) Erfinder:
- **Hofer, Gerhard**
  **91341 Röttenbach (DE)**
- **Kühne, Michael**
  **90556 Cadolzburg (DE)**
- **Richter, Franz**
  **91077 Neunkirchen (DE)**

(54) **Verfahren zum Herstellen einer Hochtemperatur-Brennstoffzelle und Hochtemperatur-Brennstoffzelle**

(57) Bei dem vorliegenden Verfahren zum Herstellen einer Hochtemperatur-Brennstoffzelle (2) wird zum Aufbringen einer Schicht (24) aus Chromoxid auf einer Oberfläche (18, 20, 22) eines chromhaltigen Bauelementes (4) eine Mischung mit zwei gasförmigen Reaktanten, wobei wenigstens einer der Reaktanten als Bestandteil Sauerstoff enthält und der Mischung im Gleichgewicht ein geringer Sauerstoffpartialdruck $p_{O2}$ unterhalb etwa $10^{-6}$ bar zugeordnet ist, in einem Verhältnis und bei einer Temperatur T zugeführt, so daß auf der Oberfläche (18, 20, 22) als Chromoxid nur $Cr_2O_3$ entsteht. Durch diese Maßnahme wird das Verdampfen von chromhaltigen Verbindungen aus dem chromhaltigen Bauelement (4) vermieden.

FIG 2

EP 0 908 529 A1

**Beschreibung**

Die Erfindung bezieht sich auf ein Verfahren zum Herstellen einer Hochtemperatur-Brennstoffzelle und auf eine Hochtemperatur-Brennstoffzelle.

Es ist bekannt, daß bei der Elektrolyse von Wasser die Wassermoleküle durch elektrischen Strom in Wasserstoff ($H_2$) und Sauerstoff ($O_2$) zerlegt werden. In einer Brennstoffzelle läuft dieser Vorgang in umgekehrter Richtung ab. Durch eine elektrochemische Verbindung von Wasserstoff ($H_2$) und Sauerstoff ($O_2$) zu Wasser entsteht elektrischer Strom mit hohem Wirkungsgrad und, wenn als Brenngas reiner Wasserstoff ($H_2$) eingesetzt wird, ohne Emission von Schadstoffen und Kohlendioxid ($CO_2$). Auch mit einem technischen Brenngas, beispielsweise Erdgas oder Kohlegas, und mit Luft (die zusätzlich mit Sauerstoff ($O_2$) angereichert sein kann) anstelle von reinem Sauerstoff ($O_2$) erzeugt eine Brennstoffzelle deutlich weniger Schadstoffe und weniger Kohlendioxid ($CO_2$) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden und einen zwischen den beiden Elektroden angeordneten, als Membran ausgeführten Festelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Bei der Reaktion des Chroms (Cr) eines metallischen chromhaltigen Bauelements der Hochtemperatur-Brennstoffzelle, insbesondere der Verbundleiterplatte, mit Sauerstoff ($O_2$) oder auch einem Gemisch aus Wasserstoff ($H_2$) und Wasserdampf ($H_2O$) entstehen an der Oberfläche des Bauelements während des Betriebes der Hochtemperatur-Brennstoffzelle gasförmige flüchtige Chromoxide bzw. -Hydroxide. Falls der Wasserstoff auf der Anodenseite durch Reformierung von Kohlenwasserstoffen gebildet ist, können Restgase auch zu flüchtigen Carbidverbindungen führen. Diese gelangen in die Elektroden der Elektrolyt-Elektroden-Einheit der Hochtemperatur-Brennstoffzelle, wobei sie anschließend durch Diffusion in den Elektrolyten (genauer in den Grenzbereich zwischen der Elektrode und den Elektrolyten) gelangen. Dies führt zu Alterungserscheinungen in der Elektrolyt-Elektroden-Einheit, wodurch die Funktionsfähigkeit der Hochtemperatur-Brennstoffzelle (und damit des gesamten Hochtemperatur-Brennstoffzellenstapels), beispielsweise die Langlebigkeit, entscheidend beeinträchtigt wird.

Um das Abdampfen von chromhaltigen Verbindungen aus dem metallischen Bauelement während des Betriebes zu vermeiden sind aus dem Stand der Technik Schutzschichten bekannt, die neben Chrom (Cr) auch noch andere Elemente des Periodensystems enthalten. Diese bekannten Schutzschichten erweisen sich als aufwendig in der Herstellung und weisen zudem eine nicht ausreichende Haftfähigkeit auf dem metallischen Bauelement auf. Außerdem ist das Problem des Aodampfens von chromhaltigen Verbindungen nur unzureichend gelöst.

Der Erfindung liegt nun die Aufgabe zugrunde, ein einfaches Verfahren zum Herstellen einer Hochtemperatur-Brennstoffzelle anzugeben, bei der dennoch das Verdampfen von chromhaltigen Verbindungen aus einem chromhaltigen Bauelement während des Betriebes der Hochtemperatur-Brennstoffzelle weitgehend vermieden ist.

Bei einem Verfahren zum Herstellen einer Hochtemperatur-Brennstoffzelle wird zum Aufbringen einer Schicht aus Chromoxid auf einer Oberfläche eines chromhaltigen Bauelementes gemäß der Erfindung von einer Mischung mit zwei gasförmigen Reaktanten ausgegangen, wobei wenigstens einer der Reaktanten als Bestandteil Sauerstoff enthält und der Mischung im Gleichgewicht ein geringer Sauerstoffpartialdruck $p_{02}$ unterhalb etwa $10^{-6}$ bar zugeordnet ist. Diese Mischung wird in einem Verhältnis und bei einer Temperatur zugeführt, so daß auf der Oberfläche nur $Cr_2O_3$ und praktisch keine anderen Chromoxide entstehen. Dieses $Cr_2O_3$ bildet eine gut haftende, dicke Schicht.

Die Erfindung geht dabei davon aus, daß Sauerstoffgas oder eine Mischung aus Sauerstoff und einem Trägergas (z.B. eine Mischung $O_2/H_2O$) nur bei einem Sauerstoffpartialdruck $p_{O2}$, der über etwa $10^{-5}$ bar liegt, noch verfahrens- und meßtechnisch handhabbar ist, um durch Oxidation des Chroms an der Oberfläche des Bauelements eine Chromoxidschicht aufwachsen zu lassen. Dabei ist angenommen, daß in dieser Atmosphäre durch die Oxidation nicht nur das

sehr stabile $Cr_2O_3$ entsteht, sondern auch $CrO_2$ und $CrO_3$, die wesentlich instabiler und bereits bei der Oxidation teilweise gasförmig sind. Um diese Reaktionsprodukte zu vermeiden, wird als Gasmischung nicht eine Mischung mit gasförmigem Sauerstoff (z.B. $O_2/H_2O$), sondern $H_2/H_2O$, $CO/CO_2$ oder eine ähnliche Gasmischung verwendet, bei der Sauerstoff ($O_2$) im Gleichgewicht nur in so geringen Mengen vorliegt, daß dem Sauerstoff ($O_2$) ein Partialdruck $p_{O2}$ unter $10^{-6}$ bar zuzuordnen ist. Ein solcher Sauerstoffgehalt ist selbst praktisch gar nicht mehr meßbar, sondern nur aus den thermodynamischen Daten der Reaktionsgase ermittelbar; die Reaktionsbedingungen sind jedoch durch Wahl einer geeigneten Temperatur, die mit der üblichen Ofentechnologie beherrschbar ist und auch zu einer befriedigenden Reaktionsgeschwindigkeit führt, und durch das Mischungsverhältnis der Reaktionsgase so gewählt, daß nur das stabile $Cr_2O_3$ entsteht und die anderen Chromoxide nicht gebildet werden.

Für den Fall, daß sich außer den genannten Oxiden $CrO_2$, $CrO_3$ und $Cr_2O_3$ auch noch geringe Mengen anderer Oxide bilden sollten, kann man annehmen, daß diese anderen Oxide noch stabiler sind als $Cr_2O_3$ oder jedenfalls das Verhalten der Chromoxidschicht nicht stören. Das Aufbringen der chromhaltigen Schicht geschieht dann in der Weise, daß die Oberfläche des Bauelements bei einer erhöhten Temperatur T einer gasförmigen Mischung aus Reaktionsgasen angesetzt wird, die bei dieser Temperatur auf das Chrom des Bauelements oxidierend, aber auf $CrO_2$ und $CrO_3$ reduzierend wirkt. Solche unerwünschten Oxide $CrO_2$ und $CrO_3$ werden also beseitigt bzw. können sich gar nicht erst bilden.

Ein Maß für die Bildung einer stabilen oxidischen Verbindung (mit anderen Worten für die Bildung einer oxidischen Verbindung zum Vermeiden von flüchtigen gasförmigen Verbindungen) ist die Änderung der Standard Gibbs-Enthalpie $\Delta G^0$. Je negativer der Wert für die Änderung der Standard Gibbs-Enthalpie $\Delta G^0$ für eine oxidische Verbindung ist, desto stabiler ist diese Verbindung gegenüber der Bildung von flüchtigen gasförmigen Verbindungen. Die Änderung der Standard Gibbs-Enthalpie $\Delta G^0$ ist über die Beziehung

$$\Delta G^0 = H - T\Delta S$$

mit der Änderung der Entropie $\Delta S$ verknüpft (H: Enthalpie; T: Temperatur). Die Änderung der Entropie $\Delta S$ ist ein Maß für den Ordnungszustand eines Systems. Um so größer die Änderung der Entropie $\Delta S$, desto negativer ist der Wert für die Änderung der Standard Gibbs-Enthalpie $\Delta G^0$. Das heißt mit anderen Worten auch: Um so wahrscheinlicher ein Zustand ist, desto stabiler ist er auch.

Unter den bekannten oxidischen chromhaltigen Verbindungen $CrO_2$, $CrO_3$ und $Cr_2O_3$ weist das Chromoxid $Cr_2O_3$ in Abhängigkeit von der Temperatur T die negativsten Werte für die Änderung der Standard

Gibbs-Enthalpie $\Delta G^0$ auf. Verglichen werden jeweils die Werte für die Änderungen der Standard Gibbs-Enthalpie $\Delta G^0$ für die Bildung eines Chromoxids durch die Reaktion des metallischen Chroms mit einem Mol Sauerstoff ($O_2$) in Abhängigkeit von der Temperatur T. Eine aus Chromoxid $Cr_2O_3$ bestehende Schicht ist also am stabilsten gegenüber einer Verdampfung von flüchtigen Chromverbindungen aus dem chromhaltigen Bauelement. Alle anderen bekannten Chromoxide bzw. Chromhydroxide weisen negative Werte mit kleinerem Absolutbetrag für die Änderung der Standard Gibbs-Enthalpie $\Delta G^0$ auf und sind somit nicht ausreichend stabil. Das Chromoxid $Cr_2O_3$ der auf dem Bauelement aufzubringenden Schicht reagiert nicht mit einer sauerstoffhaltigen Atmosphäre, denn eine solche Reaktion würde eine positive Enthalpieänderung (also eine negative Entropieänderung) darstellen und daher nicht spontan ablaufen.

Je negativer der Wert für die Enthalpieänderung einer oxidische Verbindung ist, um so kleiner muß auch der Sauerstoffpartialdruck $p_{O2}$ in Abhängigkeit von der Temperatur T während der Oxidation sein. Der für das erfindungsgemäße Verfahren bei der Oxidation des Chroms an der Bauteil-Oberfläche maßgebliche, extrem niedrige Sauerstoffpartialdruck $p_{O2}$ ist der Wert, der - wenigstens in einer thermodynamischen Berechnung - theoretisch zu der Sauerstoff enthaltenden Mischung mit zwei Reaktanten gehört, welcher das chromhaltige Bauelement zum Aufbringen der Schicht ausgesetzt wird.

Jedem Verhältnis der Anteile der gasförmigen Reaktanten des Gemisches ist ein Sauerstoffpartialdruck $p_{O2}$ zugeordnet, der zumindest unterhalb eines Sauerstoffpartialdruckes $p_{O2}$ kleiner $10^{-5}$ bar liegt und durch die alleinige Zuführung von Sauerstoff ($O_2$) praktisch nicht mehr erreicht werden kann. Da das Chromoxid $Cr_2O_3$ die negativsten Enthalpiewerte im Vergleich zu allen bekannten Chromoxiden hat, ist durch ein entsprechendes Mischungsverhältnis der Reaktanten somit auch gewährleistet, daß unterhalb eines aus den Enthalpien der Chromoxide bestimmbaren Sauerstoffpartialdruckes $p_{O2}$ in der Mischung sich ausschließlich nur das Chromoxid $Cr_2O_3$ bildet. Unter diesen Bedingungen wird zwar Chrom zu $Cr_2O_3$ oxidiert, jedoch $CrO_3$ (und jedes andere weniger stabile Oxid) wird reduziert bzw. kann sich gar nicht erst bilden.

Mit diesem Verfahren wird somit eine Schicht aus Chromoxid $Cr_2O_3$ auf der Oberfläche des chromhaltigen Bauelementes aufgetragen, die weitgehend eine Verdampfung von chromhaltigen Verbindungen aus dem chromhaltigen Bauelement verhindert und dennoch leicht herzustellen ist, da es sich nur um eine einlagige Schicht handelt. Außerdem hat sich in der Praxis gezeigt, daß diese Schicht ein gutes Haftverhalten auf der Oberfläche des chromhaltigen Bauelementes aufweist.

Insbesondere können als gasförmige Reaktanten Wasserstoff ($H_2$) und Wasserdampf ($H_2O$) vorgese-

hen sein. Die beiden Reaktanten sind in den erforderlichen Mischungsverhältnissen, wobei das Mischungsverhältnis ein Maß für den Sauerstoffpartialdruck $p_{O2}$ ist, industriell erhältlich und somit für das Verfahren geeignet.

In einer weiteren Ausgestaltung beträgt die Temperatur T zum Aufbringen der Schicht zwischen 500 und 1200 °C, insbesondere ungefähr 950 °C. In diesem Temperaturbereich sind Standardöfen einsetzbar. Bei einer Temperatur T von etwa 950 °C erhält man besonders gute Schichten.

Vorzugsweise beträgt der Wasserstoff-Anteil in Abhängigkeit von der Temperatur wenigstens die Hälfte des Wasserdampf-Anteiles. Wird der Wasserstoff-Anteil kleiner gewählt, so kann neben dem Chromoxid $Cr_2O_3$ wenigstens noch ein weiteres Chromoxid entstehen. Die Schicht würde dann wenigstens zwei Chromoxide mit unterschiedlichen thermischen Ausdehnungskoeffizienten aufweisen. Bei Temperaturschwankungen während des Betriebes der Brennstoffzelle kann es infolge der unterschiedlichen thermischen Ausdehnungskoeffizienten zu Rißbildungen (z.B. platzt ein Teil der Schicht ab) in der Schicht kommen. Das Abdampfen von flüchtigen chromhaltigen Stoffen aus dem Bauteil (oder auch aus der Schicht selbst) kann dann nicht mehr unterbunden werden.

Bevorzugt sollte der Wasserstoff-Anteil in Abhängigkeit von der Temperatur höchstens das $10^7$-fache des Wasserdampfanteiles betragen. Bei höheren Wasserstoffanteilen kommt es nicht mehr oder nur sehr langsam zur Bildung der notwendigen Schicht aus Chromoxid $Cr_2O_3$ auf der Oberfläche des metallischen Bauelements.

Gemäß der Erfindung enthält eine Hochtemperatur-Brennstoffzelle eine auf einem chromhaltigen Bauelememt, insbesondere auf einer Verbundleiterplatte, angeordnete Schicht aus Chromoxid $Cr_2O_3$.

Weitere vorteilhafte Ausgestaltungen sind in den Unteransprüchen wiedergegeben.

Zum besseren Verständnis der Erfindung und ihrer Weiterbildungen werden mehrere Ausführungsbeispiele anhand zweier FIG erläutert. Es zeigen:

FIG 1    einen Ausschnitt aus einer Hochtemperatur-Brennstoffzelle in schematischer Darstellung;

FIG 2    ein Diagramm mit den Änderungen der Standard Gibbs-Enthalpie $\Delta G^0$ für verschiedene Chromoxide und den zu den entsprechenden Gleichgewichten gehörenden Sauerstoffpartialdrücken $p_{O2}$;

FIG 3    zeigt die gleichen Enthalpieänderungen $\Delta G^0$ und das zugehörige Mischungsverhältnis in einer $H_2/H_2O$-Atmosphäre.

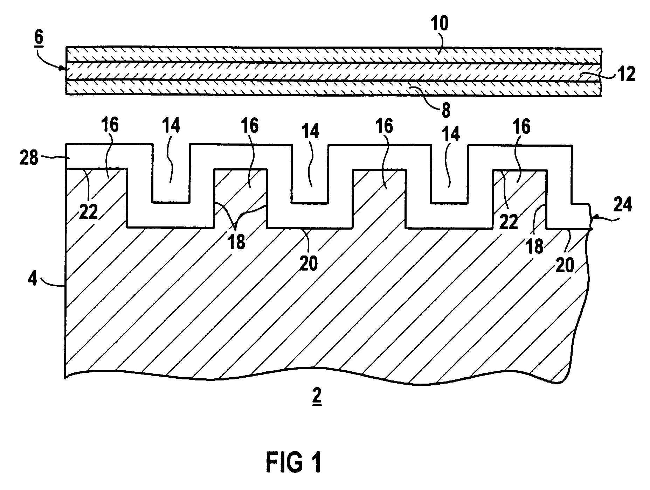

Gemäß FIG 1 umfaßt eine Hochtemperatur-Brennstoffzelle 2 ein Bauelement 4 (hier als Verbundleiterplatte 4 ausgeführt) und ein Elektrolyt-Elektroden-Element (Einheit 6). Die Einheit 6 umfaßt eine Kathode 8 und eine Anode 10, wobei zwischen den beiden Elektroden 8,10 ein Festelektrolyt 12 angeordnet ist.

Die Kathode 8 ist dabei auf der der Verbundleiterplatte 4 zugewandten Seite des Festelektrolyten 12 angeordnet.

In die Oberseite der Verbundleiterplatte 4 aus einer Chrombasislegierung (bei einer Chrombasislegierung beträgt der Anteil an Chrom (Cr) wenigstens 50 Gew-%), sind gasführende Kanäle 14 weitgehend parallel zueinander eingearbeitet. Die gasführenden Kanäle 14 sind jeweils durch einen Steg 16 voneinander getrennt. Ist die Verbundleiterplatte 4 als bipolare Platte ausgeführt, d.h. daß die Verbundleiterplatte 4 innerhalb eines Hochtemperatur-Brennstoffzellenstapels angeordnet ist, so ist die nicht näher dargestellte Unterseite der Verbundleiterplatte 4 in gleicher Weise wie die Oberseite strukturiert, wobei die gasführenden Kanäle in der Unterseite angenähert senkrecht zu den Kanälen 14 in der Oberseite verlaufen.

Über die gasführenden Kanäle 14 wird die Kathode 8 der Einheit 6 mit einem Betriebsmittel, beispielsweise Luft oder Sauerstoff ($O_2$) aus der Umgebung, versorgt. Über die Stege 16 ist ein elektrischer Kontakt zwischen der Verbundleiterplatte 4 und der Kathode 8 der Einheit 6 gewährleistet.

Die der Kathode 8 der Einheit 6 zugewandte Oberfläche 18,20,22 der Verbundleiterplatte 4 umfaßt die Seitenflächen 18 und die Grundflächen 20 der gasführenden Kanäle 14 sowie die Stirnflächen 22 der Stege 16. Die Seitenflächen 18 der gasführenden Kanäle 14 sind somit zugleich die Seitenflächen 18 der Stege 16.

Um ein Verdampfen von Chrom bzw. chromhaltigen flüchtigen Verbindungen während des Betriebes der Brennstoffzelle 2 aus der Verbundleiterplatte 6 zu verhindern, ist die Oberfläche 18,20,22 der Verbundleiterplatte 4 mit einer Schicht 24 aus Chromoxid $Cr_2O_3$ versehen. Die Schicht 24 enthält also keine weiteren Chromoxide. Sie weist in der Regel eine Dicke zwischen 20 und 100 μm auf. In einer weiteren Ausführungsform ist die Oberfläche 18,20,22 der Verbundleiterplatte 4 nur teilweise mit der Schicht 24 versehen. Dabei sind beispielsweise nur die Stirnflächen 22 der Stege 16 mit der Schicht 24 versehen. Die Schicht 24 aus Chromoxid $Cr_2O_3$ ist stabil, verhindert die Verdampfung aus der Verbundleiterplatte 6 nahezu vollständig und besitzt noch eine ausreichende elektrische Leitfähigkeit.

Das feste Chromoxid $Cr_2O_3$ der Schicht 24 reagiert nicht mit Sauerstoff ($O_2$) unter Bildung von weiteren Oxiden, da die Änderung der Standard Gibbs-Enthalpie $\Delta G^0$ für diese Reaktion positive Werte aufweist und die chemische Reaktion somit nicht in diese Richtung ablaufen kann.

Beim Verfahren zum Aufbringen der Schicht 24 auf der Oberfläche 18,20,22 der Verbundleiterplatte 4 wird eine Mischung mit zwei gasförmigen Reaktanten, wobei wenigstens einer der Reaktanten als Bestandteil Sauerstoff enthält, der Oberfläche 18,20,22 in einem Verhältnis (genauer einem Mischungsverhältnis) bei einer Temperatur T zugeführt, so daß auf der Oberfläche 18,20,22 keine anderen Oxide entstehen. Der dieser zu-geführten Mischung zuzuordnende Sauerstoffpartialdruck $p_{O2}$ liegt notwendigerweise unterhalb von $10^{-6}$ bar und kann für reinen Sauerstoff ($O_2$) praktisch nur mit unvernünftigem Aufwand oder überhaupt nicht erreicht werden.

Die Änderungen der Standard Gibbs-Enthalpie $\Delta G^0$ ist ein Maß für die Stabilität einer durch eine chemische Reaktion hergestellte Verbindung. Um so negativer die Werte für die Änderungen der Standard Gibbs-Enthalpie $\Delta G^0$ sind, um so stabiler ist die Verbindung.

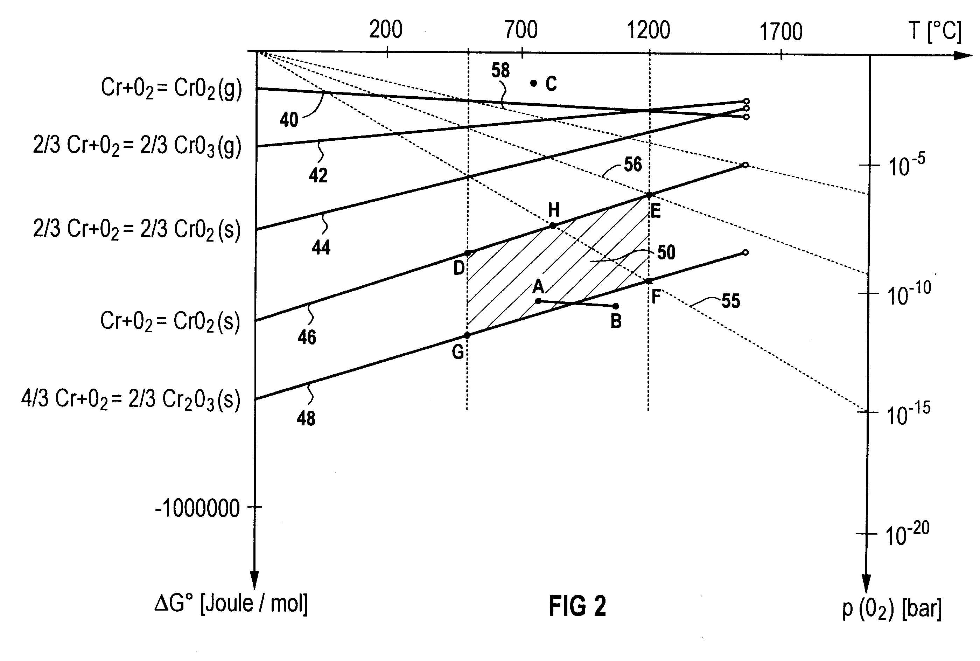

In FIG 2 sind die verschiedenen Oxidationsreaktionen für metallisches Chrom an der linken Ordinate aufgeführt, wobei die Bildung von gasförmigen und festen Phasen durch entsprechenden Zusatz von "g" bzw. "s" gekennzeichnet ist. Die Kurven 40,42,44,46 und 48 geben jeweils in Abhängigkeit von der Temperatur T die zur entsprechenden Gibbs-Enthalpie $\Delta G^0$ unter Standardbedingungen gehörenden Koexistenzbedingungen an. Unter diesen Koexistenzbedingungen herrscht ein Gleichgewicht, in dem Chrom und das entsprechende Oxid nebeneinander vorliegen. So gehört z.B. zu 1200 °C und einem Reaktionsgleichgewicht

$$4/3\ Cr+O_2 \leftrightarrow 2/3\ Cr_2O_3$$

(s) der Punkt F, während zu 800 °C und dem Gleichgewicht

$$Cr+O_2 \leftrightarrow CrO_2$$

(s) der Punkt H gehört. Beiden Gleichgewichten ist praktisch der gleiche Sauerstoffpartialdruck $p_{O2}$ zugeordnet, der entsprechend der Geraden 55 als $p_{O2} = 10^{-15}$ bar (rechte Ordinate) aus thermodynamischen Daten errechnet ist, da er meßtechnisch nicht mehr erfaßt werden kann. Im Punkt H reicht die Enthalpie der Reaktion

$$4/3\ Cr+O_2 \leftrightarrow 2/3\ Cr_2O_3$$

aber auch zur Bildung von $Cr_2O_3$ aus, während im Punkt F kein $CrO_2$ gebildet wird.

Das Gleichgewicht

$$Cr+O_2 \leftrightarrow CrO_2$$

(s) kann aber auch bei 1200 °C erreicht werden (Punkt E), wobei $p_{O2} \approx 10^{-9}$ bar gilt (Gerade 56). Auch dieser Sauerstoffpartialdruck $p_{O2}$ ist z.B. für ein Gemisch $O_2/H_2O$ weder verfahrenstechnisch noch meßtechnisch beherrschbar. Ein O/$H_2O$-Gemisch wäre vielmehr erst oberhalb etwa $p_{O2} = 10^{-6}$ bar (Gerade 58) zur Bildung irgendeiner Chromoxidschicht auf dem Bauteil brauchbar. Beherrschbare Bedingungen würden also z.B. im Punkt C vorliegen. Dieser Punkt liegt aber oberhalb der Kurve 40, die das Gleichgewicht zwischen Cr und gasförmigen $CrO_2$ beschreibt.

Bei einem Punkt, der unterhalb dieser Kurve 40 liegt, findet keine Reaktion statt (das Gleichgewicht ist auf die Seite des metallischen Chroms verschoben), bei dem oberhalb liegenden Punkt C dagegen läuft die Bildung des unerwünschten, gasförmigen $CrO_2$ ab. Außerdem liegt dieser Punkt C auch oberhalb der Kurven 42,44,46 und 48, so daß auch die dazugehörigen Oxidationsreaktionen gleichzeitig ablaufen. Die unerwünschte Bildung der instabilen Oxide konkurriert also mit der Bildung des erwünschten $Cr_2O_3$, wobei die Reaktionsbedingungen des Punktes C nicht nur auf metallisches Chrom, sondern auch auf die Chromoxide oxidierend wirkt.

Diese unerwünschte Chromoxid-Bildung wird jedoch vermieden, wenn die Reaktionsbedingungen (bei der betrachteten Temperatur von 700 °C ist $p_{O2}$ der variierbare Reaktionsparameter) so verschoben werden, daß sie auf die unerwünschten Oxide reduzierend wirken und nur noch zur Bildung von $Cr_2O_3$ führen. Die Reaktion muß also in dem Bereich unter die Kurve 46 verschoben werden, da diese Kurve 46 - wie bereits erläutert wurde - die Bedingungen angibt, bei denen sich noch metallisches Chrom im Gleichgewicht mit bereits gebildeten $CrO_2$(s) befindet. Allerdings darf die Reaktion nicht unter die Gleichgewichtskurve 48 des stabilen $Cr_2O_3$ verschoben werden, da in dem unterhalb liegenden Bereich nur noch das metallische Chrom stabil ist und der Sauerstoffpartialdruck $p_{O2}$ nicht mehr zur Oxidation des Chroms ausreicht.

Dies wird noch deutlicher, wenn die Reaktionsbedingungen zunächst entsprechend dem Punkt A gewählt und dann zum Punkt B verschoben werden (vor allem durch Erhöhung der Reaktionstemperatur T). Dann herrschen zunächst - trotz eines Sauerstoffpartialdrucks $p_{O2}$ von nur $10^{-24}$ bar - oxidierende Bedingungen, die zur Bildung von $Cr_2O_3$ ausreichen (da die Kurve 48 überschritten ist), jedoch bei den Oxiden zur Bildung von metallischen Chrom führen (da die Kurven 40,42,44, und 46 unterschritten sind), das höchsten wieder zu $Cr_2O_3$ oxidieren kann. Im Punkt B kommt es jedoch nicht mehr zur Bildung von $Cr_2O_3$, vielmehr ist jetzt nur noch metallisches Chrom stabil und das im Punkt A zunächst gebildete Oxid wird sogar reduziert.

Um zu einem beherrschbaren Verfahren zu gelangen, kann aber zur Bildung des Chromoxids nicht von einem Gemisch aus Sauerstoff und einem inerten Trägergas wie Wasser ausgegangen werden.

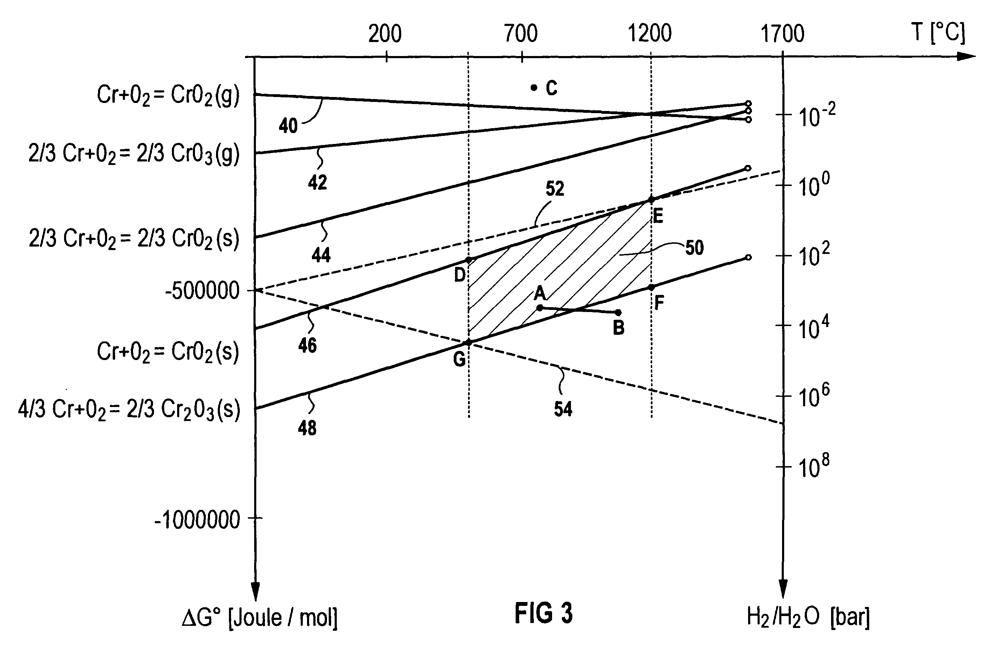

FIG 3 zeigt die gleichen Koexistenzkurven der Oxidationsreaktionen, jedoch wird hier von einem Reaktionsgemisch $H_2/H_2O$ ausgegangen, dem unter Standardbedingungen eine Gibbs-Enthalpie $\Delta G^0$ von etwa -500000 J/mol rechnerisch zugeordnet ist. Die Reaktionsbedingungen des Punktes E liegen dann bei einem Mischungsverhältnis $H_2:H_2O$ von etwa 0,5 vor (Gerade 52); für den Reaktionspunkt G beträgt das

Mischungsverhältnis etwa $10^7$ (Gerade 54).

Geht man also von einem brauchbaren Temperaturbereich zwischen 500 °C und 1200 °C aus, so entnimmt man der Figur 3, daß der für die Bildung der Schicht brauchbare Bereich zwischen den Kurvenstücken D,E der Kurve 46 und G,F der Kurve 48 liegt. Dieser Bereich ist durch Variation des Mischungsverhältnisses $H_2:H_2O$ auch technisch beherrschbar.

Die Schicht 24 (siehe FIG 1) wird bei einer Temperatur T zwischen 500 und 1200 °C, vorzugsweise bei etwa 950 °C, aufgetragen. In diesem Bereich können Standardöfen verwendet werden, wodurch zusätzliche apparative Kosten vermieden werden. Außerdem läuft die Reaktion zur Chromoxidbildung hier mit einer geeigneten Geschwindigkeit zur Bildung einer homogenen Schicht ab. Die Werte für die Änderung der Standard GibbsEnthalpie $\Delta G^0$ müssen somit aus der schraffierten Fläche 50, begrenzt durch die Verbindungslinien zwischen den Eckpunkten D,E,F und G, ausgewählt werden, wobei die Verbindungslinie zwischen den Eckpunkten D und E nicht zur Fläche 50 gehört.

Zum Erzeugen der Schicht aus Chromoxid $CrO_2$ muß nun die Mischung aus Wasserstoff ($H_2$) und Wasserdampf ($H_2O$) in dem diesen Werten für die Änderung der Standard Gibbs-Enthalpie $\Delta G^0$ entsprechenden Mischungsverhältnis zugeführt werden. In Abhängigkeit von der Temperatur T beträgt der Wasserstoff-Anteil wenigstens die Hälfte des Wasserdampf-Anteiles für T = 1200 °C und höchstens das $10^7$-fache für T = 500 °C (siehe Geraden 50 und 52 durch die Eckpunkte E bzw. G). Der dazugehörige Sauerstoffpartialdruck $p_{O2}$ ist von der Temperatur T abhängig und beträgt höchstens $10^{-9}$ bar (Gerade 56 in FIG 2). Dieser Wert für den Sauerstoffpartialdruck $p_{O2}$ ist wie alle Werte unter $10^{-6}$ bar (siehe Gerade 58) nicht durch die alleinige Zufuhr von Sauerstoff ($O_2$) erreichbar. Diese können aber indirekt über das entsprechende Verhältnis der Mischung $H_2/H_2O$ erreicht werden.

Versuche mit T = 950 °C und einer Oxidationsdauer von 4 Stunden in einem $H_2/H_2O$ Gemisch im Verhältnis $10^4$ : 1 führten zu der gewünschten $Cr_2O_3$-Schicht.

Die Schicht aus Chromoxid $Cr_2O_3$ ist neben ihrem Einsatz in der Brennstofzelle überall dort verwendungsfähig, wo eine Sperre gegenüber der Verdampfung von flüchtigen chromhaltigen Verbindungen aufgebaut werden soll.

**Patentansprüche**

1. Verfahren zum Herstellen einer Hochtemperatur-Brennstoffzelle (2), bei dem zum Aufbringen einer Schicht (24) aus Chromoxid auf einer Oberfläche (18, 20, 22) eines chromhaltigen Bauelementes (4) eine Mischung mit zwei gasförmigen Reaktanten, wobei wenigstens einer der Reaktanten als Bestandteil Sauerstoff enthält und der Mischung im Gleichgewicht ein geringer Sauerstoffpartialdruck $p_{O2}$ unterhalb etwa $10^{-6}$ bar zugeordnet ist, in einem Verhältnis und bei einer Temperatur T zugeführt wird, so daß auf der Oberfläche (18, 20, 22) als Chromoxid nur $Cr_2O_3$ entsteht.

2. Verfahren zum Herstellen einer Hochtemperatur-Brennstoffzelle (2), bei dem zum Aufbringen einer Schicht (24) aus Chromoxid auf einer Oberfläche (18, 20, 22) eines chromhaltigen Bauelementes (4), wobei die Oberfläche bei erhöhter Temperatur T einer Mischung aus zwei gasförmigen Reaktanten unter Bedingungen ausgesetzt wird, daß die Mischung bei dieser Temperatur T auf $CrO_2$ und $CrO_3$ reduzierend und auf metallisches Chrom an der Oberfläche des Bauelements oxidierend wirkt.

3. Verfahren nach Anspruch 1 oder 2,
**dadurch gekennzeichnet,** daß als Reaktanten Wasserstoff ($H_2$) und Wasserdampf ($H_2O$) vorgesehen sind.

4. Verfahren nach Anspruch 3,
**dadurch gekennzeichnet,** daß die Temperatur T zum Aufbringen der Schicht (24) zwischen 500 und 1200 °C beträgt.

5. Verfahren nach Anspruch4,
**dadurch gekennzeichnet,** daß die Temperatur T etwa 950 °c beträgt.

6. Verfahren nach nach einem der Ansprüche 3 bis 5,
**dadurch gekennzeichnet,** daß der Wasserstoff-Anteil wenigstens die Hälfte des Wasserdampf-Anteiles beträgt.

7. Verfahren nach einem der Ansprüche 3 bis 6,
**dadurch gekennzeichnet,** daß der Wasserstoff-Anteil höchstens das $10^7$-fache des Wasserdampf-Anteiles beträgt.

8. Hochtemperatur-Brennstoffzelle (2) mit einer nach einem der Ansprüche 1 bis 7 hergestellten Schicht (24).

9. Brennstoffzelle (2) nach Anspruch 8,
**dadurch gekennzeichnet,** daß die Schicht (24) eine Dicke zwischen 20 und 100 $\mu$m aufweist.

10. Brennstoffzelle (2) nach Anspruch 8 oder 9,
**dadurch gekennzeichnet,** daß nur die Oberfläche (22) von Stegen (16) am Bauelement (4) mit der Schicht (24) versehen ist.

FIG 1

FIG 2

T [°C]

H₂/H₂O [bar]

$10^{-2}$

$10^{0}$

$10^{2}$

$10^{4}$

$10^{6}$

$10^{8}$

1700

1200

700

200

50

52

54

40

42

44

46

48

• C

• B

A

E

F

D

G

ΔG° [Joule / mol]

$Cr + O_2 = CrO_2(g)$

$2/3\ Cr + O_2 = 2/3\ CrO_3(g)$

$2/3\ Cr + O_2 = 2/3\ CrO_2(s)$

$Cr + O_2 = CrO_2(s)$

$4/3\ Cr + O_2 = 2/3\ Cr_2O_3(s)$

-500000

-1000000

**FIG 3**

Europäisches
Patentamt

**EUROPÄISCHER RECHERCHENBERICHT**

Nummer der Anmeldung

EP 97 11 7611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | US 5 656 099 A (OHMI TADAHIRO)<br>* Abbildungen 3-5 *<br>* Spalte 2, Zeile 41-67 *<br>* Spalte 4, Zeile 43 - Spalte 5, Zeile 28 *<br>* Spalte 5 *<br>--- | 1-10 | C23C8/16<br>H01M8/12<br>H01M8/02 |
| Y | EP 0 642 871 A (OSAKA OXYGEN IND ;OHMI TADAHIRO (JP))<br>* Spalte 2, Zeile 26-51 *<br>* Spalte 3, Zeile 6-15 *<br>--- | 2-10 | |
| Y | US 3 939 293 A (BRUSIC VLASTA ET AL)<br>* Spalte 2, Zeile 35-49 *<br>* Spalte 4, Zeile 65 - Spalte 5, Zeile 40 *<br>--- | 1-10 | |
| Y | DE 195 47 699 A (KERNFORSCHUNGSANLAGE JUELICH)<br>* Spalte 1, Zeile 62 - Spalte 2, Zeile 14 *<br>* Spalte 2, Zeile 53-62 *<br>--- | 1-10 | |
| Y | DE 196 09 813 C (KERNFORSCHUNGSANLAGE JUELICH)<br>* Spalte 1, Zeile 3 - Spalte 2, Zeile 37 *<br>--- | 1-10 | RECHERCHIERTE SACHGEBIETE (Int.Cl.6)<br>C23C<br>H01M |
| Y | DE 44 22 624 A (SIEMENS AG)<br>* Spalte 1, Zeile 27-34 *<br>* Spalte 2, Zeile 3-28 *<br>--- | 1-10 | |
| Y | US 5 064 734 A (NAZMY MOHAMED)<br>* Spalte 3, Zeile 54-59 *<br>* Spalte 5, Zeile 55-63 *<br>--- | 1-10 | |

-/--

Der vorliegende Recherchenbericht wurde für alle Patentansprüche erstellt

| Recherchenort | Abschlußdatum der Recherche | Prüfer |
|---|---|---|
| MÜNCHEN | 2.Februar 1998 | Engl, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

      ........................................................
& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 97 11 7611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 714 147 A (SULZER INNOTEC AG)<br>* Spalte 1, Zeile 15-31 *<br>* Spalte 2, Zeile 30-34 *<br>* Spalte 2, Zeile 57 - Spalte 3, Zeile 40 *<br><br>----- | 1-10 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| MÜNCHEN | 2.Februar 1998 | Engl, H |

EPO FORM 1503 03.82 (P04C03)

**EP 0 908 529 A1**

**ANHANG ZUM EUROPÄISCHEN RECHERCHENBERICHT
ÜBER DIE EUROPÄISCHE PATENTANMELDUNG NR.**  EP 97 11 7611

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-1998

| Im Recherchenbericht angeführtes Patentdokument | Datum der Veröffentlichung | Mitglied(er) der Patentfamilie | Datum der Veröffentlichung |
|---|---|---|---|
| US 5656099 A | 12-08-97 | JP 6116632 A<br>WO 9408065 A | 26-04-94<br>14-04-94 |
| EP 0642871 A | 15-03-95 | JP 6039543 A<br>US 5667133 A<br>WO 9324267 A | 15-02-94<br>16-09-97<br>09-12-93 |
| US 3939293 A | 17-02-76 | CA 1040984 A<br>DE 2503239 A<br>FR 2269587 A<br>GB 1464213 A<br>JP 50141547 A | 24-10-78<br>13-11-75<br>28-11-75<br>09-02-77<br>14-11-75 |
| DE 19547699 A | 24-07-97 | AU 1869197 A<br>WO 9723006 A | 14-07-97<br>26-06-97 |
| DE 19609813 C | 10-07-97 | AU 2379797 A<br>WO 9734332 A | 01-10-97<br>18-09-97 |
| DE 4422624 A | 04-01-96 | KEINE | |
| US 5064734 A | 12-11-91 | EP 0424732 A<br>JP 3155046 A | 02-05-91<br>03-07-91 |
| EP 0714147 A | 29-05-96 | KEINE | |

EPO FORM P0461

Für nähere Einzelheiten zu diesem Anhang : siehe Amtsblatt des Europäischen Patentamts, Nr.12/82

12